# EUROPEAN PATENT SPECIFICATION

(11) **EP 3 330 128 B1**
(45) Date of publication and mention of the grant of the patent: **30.03.2022**
(21) Application number: 16202160.4
(22) Date of filing: 05.12.2016
(51) Int. Cl.: B60Q 1/34, B60Q 1/40

(54) **CONTROL UNIT, VEHICLE AND METHOD**
STEUERUNGSEINHEIT, FAHRZEUG UND VERFAHREN
UNITÉ DE COMMANDE, VÉHICULE ET PROCÉDÉ

(43) Date of publication of application: 06.06.2018
(73) Proprietor: Continental Automotive GmbH, 30165 Hannover (DE)
(72) Inventor: Lee, HoSeok, Bugangmyeon, Sejongsi (KR)
(74) Representative: Continental Corporation

(56) References cited:
- DE-A1- 10 251 357
- US-A1- 2013 265 152
- US-B1- 9 079 499
- US-B2- 7 889 065

## Description

### TECHNICAL FIELD

The invention relates to a control unit for controlling turn lights in a vehicle, a vehicle and a respective method.

### BACKGROUND

Although applicable to any lighting system in a vehicle, the present invention will be described in combination with turn lights.

Highly frequented roads often comprise three or more lanes. Vehicles moving on such roads can move freely from one lane to another. However other vehicles driving behind the lane-changing vehicle may be faster and the lane-changing vehicle may obstruct their trajectory.

It is therefore helpful to indicate the intention to change the driving lane by a driver with the help of the turn lights. This will allow vehicles behind the lane-changing vehicle to adapt their driving accordingly, e.g. brake the vehicle or change to another lane.

However, some drivers tend to forget the turn lights when changing lanes on a road.

US 2013/0265152 A1 discloses an automatic signalling system for a vehicle having a turn signal light. The system includes a sensor configured for sensing at least a portion of lane and as processor coupled to the sensor. The processor is configured to activate the turn signal light based on a signal received from the sensor. The signal does not comprise information about the number of lanes of the road.

DE 102 51 357 A1 discloses a method for automatic activation or deactivation of a driving direction signaller of a vehicle, wherein data about the surroundings of the vehicle are captured for determination of the vehicle position. The data does not comprise information about the number of lanes of the road.

US 7,889,065 B2 is related to automatic signalling of a vehicle's intent like automatic signalling turns. Information about the number of lanes of the road is not used for automatic signalling of turns.

US 9,079,499 B1 discloses a system and method for automatically activating turn signals on a vehicle in response to signals received from a navigation system. The information from the navigation system does not comprise information about the number of lanes of the road.

### SUMMARY

Accordingly, there is a need for an improved control of the vehicle's turn lights.

A control unit for controlling turn lights in a vehicle comprises a communication interface, e.g. configured to connect the control unit to a vehicle bus of the vehicle, wherein information from other vehicle systems can be retrieved via the vehicle bus. The control unit further comprises a lighting controller coupled to the communication interface and configured to retrieve via the communication interface information about the vehicle surroundings and optionally additionally about the vehicle movement, wherein the lighting controller is further configured to control the turn lights of the vehicle, also called indicator, based on the retrieved information about the vehicle surroundings and optionally additionally about the vehicle movement. The information about the vehicle surroundings comprises road configuration information about the number of lanes of the road as stored in a navigation system or as detected by a camera system.

A vehicle comprises a control unit according to the present invention, and a vehicle bus, which connects the control unit to a number, e.g. one or more, of electronic vehicle systems.

A method for controlling turn lights in a vehicle comprises retrieving information about the vehicle surroundings and optionally additionally about the vehicle movement, e.g. via a vehicle bus, and controlling the turn lights of the vehicle based on the retrieved information about the vehicle surroundings and optionally additionally about the vehicle movement. The information about the vehicle surroundings comprises road configuration information about the number of lanes of the road as stored in a navigation system or as detected by a camera system.

As explained above, some drivers tend to either not use or forget the turn lights of their vehicle. Especially on roads where vehicles travel at high speeds, like e.g. highways, not using the turn lights can lead to uncomfortable situations.

The present invention therefore tries to assess a driving situation of a vehicle and control the turn lights accordingly.

The control unit uses information that is already available in the vehicle and acquires this information via e.g. a vehicle bus from other vehicle systems or ECUs. The further vehicle systems can e.g. be a Lane Departure Warning System, LDWS, a steering angle sensor, a GPS or navigation system, a speed sensor or the like. The control unit can receive values about e.g. the steering angle, the vehicle speed, a possible lane departure or information about the lanes of the road e.g. directly from the respective vehicle system or indirectly via a central gateway or the like.

Based on the acquired information the control unit can then judge whether it is necessary to turn on certain turn lights of the vehicle or not.

The present invention therefore increases the vehicle safety especially on high speed roads and covers up driver deficiencies.

Further embodiments of the present invention are subject of the further subclaims and of the following description, referring to the drawings.

In a possible embodiment, the information about the vehicle movement can comprise a steering angle of the steering wheel of the vehicle and/or a vehicle speed. This information can be used to determine the intended course of the vehicle and the relevance of the steering angle. If for example the vehicle is driving very slowly, e.g. at the speed of a walking pedestrian, it can e.g. be assumed that the vehicle is circulating e.g. on a parking ground. In this situation turning on the turn lights may not be mandatory.

Higher speeds, however, indicate that the use of turn lights may be helpful. Vehicles are usually driven at higher speeds on highways or at least on large roads, which may comprise a plurality of driving lanes in each direction. On such roads traffic coming from behind of the vehicle may be faster than the vehicle itself. Therefore, indicating to these upcoming vehicles the intention of the driver of the vehicle allows them to take evasive actions or slow down if necessary.

The information about the vehicle surroundings comprises road configuration information about the number of lanes of the road as stored in a navigation system, and/or can comprise information about detected lanes and/or can comprise information about a road trajectory.

The information about the road configuration allows determining if the use of the turn lights is relevant in the respective driving situation of the vehicle. If e.g. the vehicle is driving on a single lane road, it is not necessary to indicate a lane change. If however the vehicle is e.g. driving in a residential zone and turns e.g. right at cross roads it can be helpful to indicate e.g. to bicycle drivers the intention to turn right via the turn lights.

The information about detected lanes alternatively comprise the number of lanes of the road as detected by a camera system, e.g. a lane departure warning, of the vehicle, and the lane which is currently used by the vehicle. The information about detected lanes can also comprise information about the position of the vehicle in the respective lane and e.g. if the vehicle or the wheels of the vehicle cross a lane boundary or marking.

In a possible embodiment, the lighting controller can comprise a driver intention calculator, which can be configured to calculate based on the information about the vehicle movement and/or the vehicle surroundings the driver's intention and to control the turn lights of the vehicle according to the calculated driver's intention.

The driving intention calculator can e.g. calculate the probability for a specific movement of the vehicle, e.g. a lane change to the left or right lane, a right or left turn at cross roads or the like. The probability can e.g. be calculated as a decimal value. A minimum threshold can e.g. be defined for assuming a certain driver intention based on the calculated probability. The probability can also be calculated as a binary value, wherein a positive binary value indicates that a driver intention has been recognized.

In a possible embodiment, the driver intention calculator can be configured to turn the turn lights for the respective direction on, if the driver intention calculator calculates the intention to change the driving lane or perform a turn and the turn lights are currently turned off.

If the intention to change the driving lane of the vehicle is detected, this intention should be notified by the turn lights to the following vehicles and their respective drivers. This will allow the drivers to slow down their vehicles or change to another lane of the road.

The turn lights can then stay on as long as necessary. If e.g. it is determined that the vehicle changes from a right lane into a middle lane of a three lane road and the steering angle stays constant, the turn lights can further be turned on, to indicate a further change to the left lane.

The driver intention calculator can also request information e.g. from a lane departure warning system or a navigation system in the vehicle. These system will e.g. detect if the road comprises a curve and provide respective information. In this case a steering angle corresponding to the curve will not trigger the turning on of the turn lights.

In a possible embodiment, the driver intention calculator can be configured to turn the turn lights for the respective direction off, if the driver intention calculator calculates the intention to stay on the current driving lane and the turn lights are currently turned on.

Drivers sometimes forget to turn off the turn lights after performing the respective driving manoeuvre, e.g. after changing a driving lane. Since the change of a driving lane usually only comprises a very small steering angle, the turn lights will not automatically be switched off by the turn light switch in the steering wheel of the vehicle.

Therefore, if it is detected that the driver has no intention to further change the driving lane, e.g. directly after changing a lane, the turn lights can be turned off by the driver intention calculator.

The driver intention calculator can e.g. monitor the steering angle of the vehicle. If the steering angle stays constant during and after a lane change, i.e. the driver is still steering to one side, the driver intention calculator can keep the turn lights on. The turn lights can then e.g. be turned off after a change to the leftmost lane of the road.

However, the driver intention calculator can also turn the turn lights off, after the vehicle enters the central lane and turn the turn lights on again if the steering angle stays constant and the vehicle reaches the left boundary of the central lane. This will actively show the flowing vehicles that another lane change is intended and the turn light was not accidentally kept on.

In a possible embodiment, the driver intention calculator can calculate the intention to change the driving lane and/or the intention to stay on the current driving lane based at least on the steering angle of the vehicle and the position of the vehicle in a currently used lane of the road.

The driver of the vehicle can e.g. be driving on the right lane of a two or three lane highway. If the driver then turns the steering wheel to the left the driver intention calculator can further monitor the position of the vehicle in the lane. If the vehicle crosses the lane boundary to the left, the driver intention calculator can determine the driver's intention to change the driving lane.

If in this case the turn lights are currently turned off, the driver intention calculator can turn on the turn lights to the left of the vehicle.

The intention to turn left or right e.g. at cross roads can also be derived from a route of the vehicle, which is supplied by a navigation system of the vehicle.

Further, the intention to e.g. change a driving lane can also be derived at least in part by information of a vehicle radar and objects detected by the vehicle radar in front of the vehicle. If e.g. a slow vehicles is detected in front of the vehicle in the same lane and the vehicle crosses the lane boundaries, a lane change is probably intended by the driver.

Further, a threshold value can be defined, by which the vehicle has to cross the lane boundary. Such a threshold value can e.g. be defined in cm or m or in a percentage of the vehicle width.

Further, a timeout value can be defined, which delays the turning on or off of the turn lights. If e.g. the vehicle crosses the lane boundary, a timer can be started and only if the vehicle crosses the lane boundary longer than defined by the timeout value, will the turn lights be turned on.

Instead of or in addition to a timeout value a number of times a vehicle crosses a lane boundary can also be determined and compared to a threshold value.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of an embodiment of a control unit according to an embodiment of the present invention;
- Fig. 2: shows a block diagram of an embodiment of a vehicle according to an embodiment of the present invention;
- Fig. 3: shows a diagram of a road to explain an embodiment of a control unit according to the present invention;
- Fig. 4: shows a diagram of a road to explain an embodiment of a control unit according to the present invention; and
- Fig. 5: shows a flow diagram of an embodiment of a method according to the present invention.

In the figures like reference signs denote like elements unless stated otherwise.

### DETAILED DESCRIPTION OF THE DRAWINGS

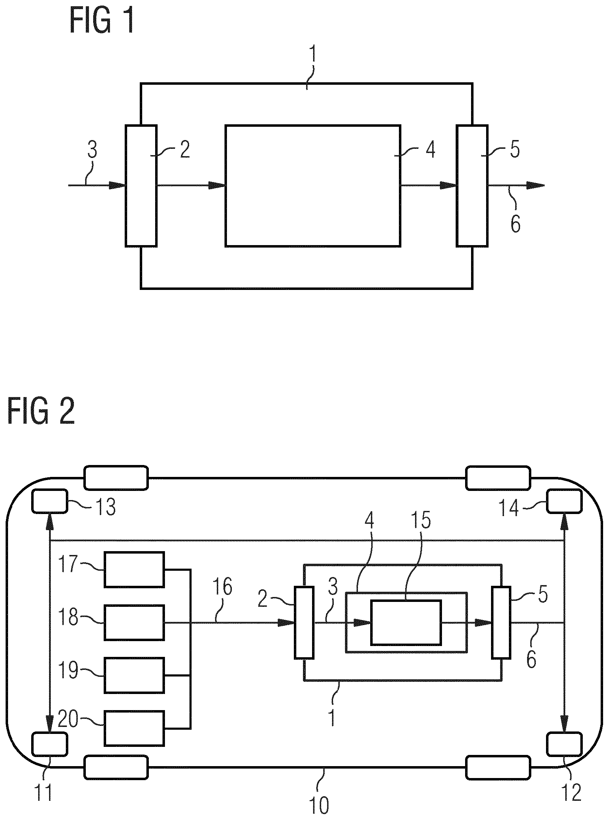

Fig. 1 shows a block diagram of a control unit 1. The control unit 1 comprises a communication interface 2 for retrieving information 3 from electronic vehicle systems (see Fig. 2). The information 3 comprises information 3 about the vehicle movement and the vehicle surroundings. The information 3 is provided to a lighting controller 4 of the control unit 1. The lighting controller 4 will determine based on the information 3, if it is necessary to turn on any of the turn lights of the vehicle (see Fig. 2). If the lighting controller 4 determines that it is necessary to turn on any of the turn lights, the lighting controller 4 will provide specific control signals 6 via the control interface 5. The control signals 6 can e.g. be discrete currents or voltages, which are directly provided to the respective turn light. Alternatively, the control signals 6 can also be digital data signals, which instruct an ECU, Electronic Control Unit, to turn on the respective turn lights. The elements of the control unit 1 can also be part of or at least partially integrated into such an ECU as Hardware or Software.

The information 3 about the vehicle movement can comprise a steering angle of the steering wheel of the vehicle and a vehicle speed. According to the invention, the information 3 about the vehicle surroundings comprises road configuration information 3 about the number of lanes and can comprise information 3 about detected lanes. Any other information like route information from a navigation system or the like can also be part of the information 3.

Fig. 2 shows a block diagram of a vehicle 10 with a control unit 1. The lighting controller 4 of the control unit 1 in Fig. 2 comprises a driver intention calculator 15. The control signals 6 are provided to the turn lights 11 - 14 of the vehicle 10, where the turn lights 11 and 12 indicate a turn to the right and the turn lights 13 and 14 indicate a turn to the left.

The vehicle 10 further comprises a plurality of electronic vehicle systems 17 - 20.

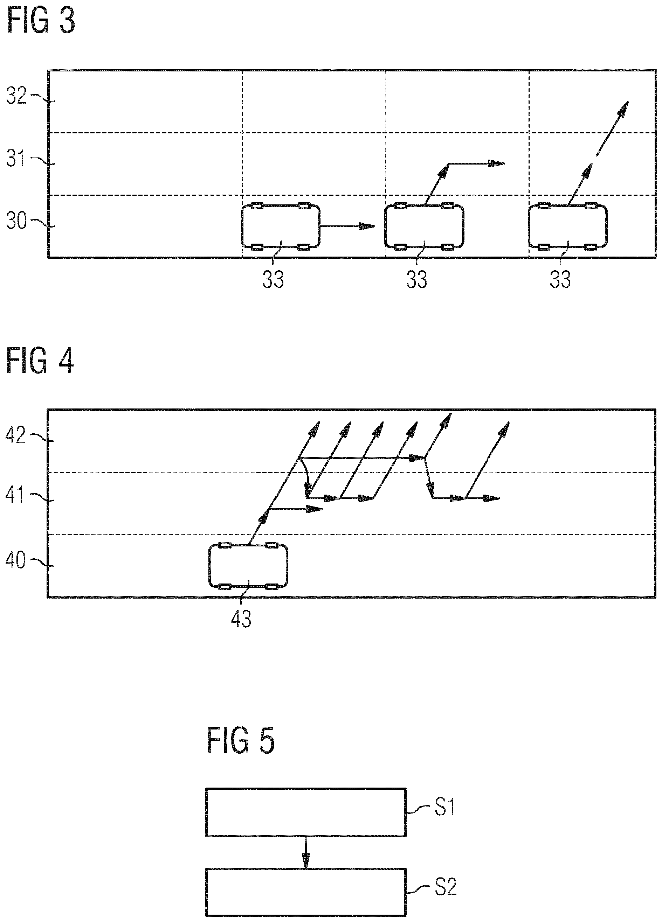

The system 17 is a lane departure warning system 17, which can inform that the vehicle 10 is departing from a lane either to the left or the right. In addition, the lane departure warning system 17 can also provide information about detected lanes (See Figs. 3 - 4) and the trajectory of the detected lanes.

The system 18 is a steering angle sensor 18, which provides to the control unit 1 the steering angle of the steering wheel of the vehicle 10.

The system 19 is a navigation system 19, which can e.g. provide information about the number of lanes of the road the vehicle 10 is travelling on and their trajectories.

Finally, the system 20 is a speed sensor 20, either a dedicated sensor or an integrated sensor e.g. of a stability control system, which provides the vehicle speed.

With the help of the steering angle and the vehicle speed, the driver intention calculator 15 can calculate the position of the vehicle 10 in the future. This information can be overlaid over information about the road and the lanes of the road the vehicle 10 is travelling on, to determine if the vehicle will leave a lane.

The driver intention calculator 15 can calculate based on the information 3 the driver's intention and generate the control signals 6 accordingly. The driver intention calculator 15 can e.g. calculate the intention to change the driving lane or the intention to stay on the current driving lane based at least on the steering angle of the vehicle 10 and the position of the vehicle 10 in a currently used lane or the trajectory of the lane. Further, the speed of the vehicle 10 can also be used to calculate the future position of the vehicle 10. If the future position of the vehicle 10 is outside the lane, which the vehicle 10 is driving on, the respective turn lights 11, 12 or 13, 14 can be set accordingly.

To set the turn lights 11, 12 or 13, 14 accordingly, the driver intention calculator 15 will turn the turn lights 11, 12 or 13, 14 for the respective direction on, only if the driver intention calculator 15 calculates the intention to change the driving lane or perform a turn and the turn lights 11, 12, 13, 14 are currently turned off. In addition, the driver intention calculator 15 will turn the turn lights 11, 12 or 13, 14 for the respective direction off, if the driver intention calculator 15 calculates the intention to stay on the current driving lane and the turn lights 11, 12, 13, 14 are currently turned on.

Fig. 3 shows a diagram of a road with three lanes 30, 31, 32 to explain possible working schemes of the driver intention calculator 15.

In a first position starting from the left of Fig. 3 a vehicle 33 is on the right lane 30 of the road. If the vehicle 33 stays in this position, e.g. for a predetermined amount of time, the driver intention calculator 15 can turn off the turn lights 11, 12 or 13, 14, if they are currently turned on.

In a second position the vehicle 33 will perform a change from the right lane 30 to the central lane 31 and then continue on that lane 31. If prior to moving to the central lane 31, the steering angle and the speed of the vehicle 33 indicate to the driver intention calculator 15 that the vehicle 33 is to move to another lane 31, the driver intention calculator 15 will turn on the turn lights 13, 14 if the driver did not turn them on before. After moving to the central lane 31, the driver intention calculator 15 will turn the turn lights 11, 12 off again, if the driver does not do so manually. There can be specific timeouts or threshold values for turning on and of the turn lights 13, 14, which will delay the switching.

In a third position the vehicle 33 will perform a change from the right lane 30 to the left lane 33. In this case, the driver intention calculator 15 can turn on the turn lights 13, 14 when the movement of the vehicle 33 starts and keep the turn lights 13, 14 on, until the vehicle 33 reaches the left lane 32. However, the driver intention calculator 15 can also turn the turn lights 13, 14 off, when the vehicle 33 centers on the central lane 31 and turn them on again, when the vehicle 33 moves out of the center of the central lane 31 by a predetermined amount.

Fig. 4 shows another diagram of a road with three lanes 40, 41, 42 to explain possible working schemes of the driver intention calculator 15.

In Fig. 4 the vehicle 43 starts on the right lane 40 and crosses to the central lane 41. However, the driver continues to move to the left lane 42. In this case the driver intention calculator 15 will wait for the final position of the vehicle 43. For example, the driver can move to the left lane 42 with at least the left vehicle wheels and then back to the central lane 41, if he wants to drive on the central lane 41, multiple crossings into the left lane can also be contemplated.

The driver intention calculator 15 will monitor the steering angle and only turn off the turn lights 13, 14 if the steering angle normalizes and indicates a straight movement for a predetermined amount of time, e.g. 2 seconds. If, however, the driver moves farther into the left lane 42, e.g. because he wants to change to that lane 42, the driver intention calculator 15 can turn the turn lights 13, 14 off and on again to indicate that second lane change.

Although the schemes of Figs. 3 and 4 have been illustrated with lane changes starting from the right lanes, they can be applied to any lane change on any road with an arbitrary number of lanes and in any direction.

Fig. 5 shows a flow diagram of a method for controlling turn lights 11, 12, 13, 14 in a vehicle 10, 33, 43.

The method comprises retrieving S1 information 3 about the vehicle surroundings and optionally additionally about the vehicle movement , and controlling S2 the turn lights 11, 12, 13, 14 of the vehicle 10, 33, 43 based on the retrieved information 3 about the vehicle surroundings and optionally additionally about the vehicle movement.

The information 3 about the vehicle movement can comprise a steering angle of the steering wheel of the vehicle 10, 33, 43 and/or a vehicle speed. According to the invention, the information 3 about the vehicle surroundings comprises road configuration information about the number of lanes of the road and/or can comprise information about detected lanes 30, 31, 32, 40, 41, 42.

Controlling S2 can comprise calculating based on the information 3 about the vehicle movement and/or the vehicle surroundings the driver's intention and controlling the turn lights 11, 12, 13, 14 of the vehicle 10, 33, 43 according to the calculated driver's intention.

Controlling can further comprise turning the turn lights 11, 12, 13, 14 for the respective direction on, if the intention to change the driving lane 30, 31, 32, 40, 41, 42 or perform a turn is calculated and the turn lights 11, 12, 13, 14 are currently turned off. In addition, controlling can comprise turning the turn lights 11, 12, 13, 14 for the respective direction off, if the intention to stay on the current driving lane 30, 31, 32, 40, 41, 42 is calculated and the turn lights 11, 12, 13, 14 are currently turned on.

Finally, the intention to change the driving lane 30, 31, 32, 40, 41, 42 and/or the intention to stay on the current driving lane 30, 31, 32, 40, 41, 42 can be calculated based at least on the steering angle of the vehicle 10, 33, 43 and the position of the vehicle 10, 33, 43 in a currently used lane 30, 31, 32, 40, 41, 42 of the road. The speed of the vehicle 10, 33, 43 can e.g. be used as additional parameter.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention as defined in the appended claims. Many other examples will be apparent to one skilled in the art upon reviewing the above specification. Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

### List of reference signs

- 1: control unit
- 2: communication interface
- 3: information
- 4: lighting controller
- 5: control interface
- 6: control signals

- 10: vehicle
- 11, 12, 13, 14: turn lights
- 15: driver intention calculator
- 16: vehicle bus
- 17, 18, 19, 20: electronic vehicle systems

- 30, 31, 32: lanes
- 33: vehicle

- 40, 41, 42: lanes
- 43: vehicle

- S1, S2: method steps

## Claims

1. Control unit (1) for controlling turn lights (11, 12, 13, 14) in a vehicle (10, 33, 43), the control unit (1) comprising:
a communication interface (2), and
a lighting controller (4) coupled to the communication interface (2) and configured to retrieve via the communication interface (2) information (3) about the vehicle surroundings and optionally additionally about the vehicle movement,
wherein the lighting controller (4) is further configured to control the turn lights (11, 12, 13, 14) of the vehicle (10, 33, 43, 53) based on the retrieved information (3) about the vehicle surroundings and optionally additionally about the vehicle movement,
**characterized in that**
the information (3) about the vehicle surroundings comprises road configuration information (3) about the number of lanes (30, 31, 32, 40, 41, 42) of the road as stored in a navigation system (19) or as detected by a camera system (17).

2. Control unit (1) according to claim 1,
wherein the information (3) about the vehicle movement comprises a steering angle of the steering wheel of the vehicle (10, 33, 43) and/or a vehicle speed.

3. Control unit (1) according to anyone of the preceding claims, wherein the information (3) about the vehicle surroundings further comprises information (3) about detected lanes (30, 31, 32, 40, 41, 42).

4. Control unit (1) according to anyone of the preceding claims, wherein the lighting controller (4) comprises a driver intention calculator (15), which is configured to calculate based on the information (3) about the vehicle movement and/or the vehicle surroundings the drivers intention and to control the turn lights (11, 12, 13, 14) of the vehicle (10, 33, 43) according to the calculated drivers intention.

5. Control unit (1) according to claim 4, wherein the driver intention calculator (15) is configured to turn the turn lights (11, 12, 13, 14) for the respective direction on, if the driver intention calculator (15) calculates the intention to change the driving lane (30, 31, 32, 40, 41, 42) or perform a turn and the turn lights (11, 12, 13, 14) are currently turned off.

6. Control unit (1) according to any one of claims 4 and 5, wherein the driver intention calculator (15) is configured to turn the turn lights (11, 12, 13, 14) for the respective direction off, if the driver intention calculator (15) calculates the intention to stay on the current driving lane (30, 31, 32, 40, 41, 42) and the turn lights (11, 12, 13, 14) are currently turned on.

7. Control unit (1) according to claims 2 to 6, wherein the driver intention calculator (15) calculates the intention to change the driving lane (30, 31, 32, 40, 41, 42) and/or the intention to stay on the current driving lane (30, 31, 32, 40, 41, 42) based at least on the steering angle of the vehicle (10, 33, 43) and the position of the vehicle (10, 33, 43) in a currently used lane (30, 31, 32, 40, 41, 42) of the road.

8. Vehicle (10, 33, 43) comprising
a control unit (1) according to any one of claims 1 to 7, and
a vehicle bus (16), which connects the control unit (1) to a number of electronic vehicle systems (17, 18, 19, 20).

9. Method for controlling turn lights (11, 12, 13, 14) in a vehicle (10, 33, 43), the method comprising:
retrieving (S1) information (3) about the vehicle surroundings and optionally additionally about the vehicle movement, and
controlling (S2) the turn lights (11, 12, 13, 14) of the vehicle (10, 33, 43) based on the retrieved information (3) about the vehicle surroundings and optionally additionally about the vehicle movement,
**characterized in that**
the information (3) about the vehicle surroundings comprises road configuration information (3) about the number of lanes (30, 31, 32, 40, 41, 42) of the road as stored in a navigation system (19) or as detected by a camera system (17).

10. Method according to claim 9,
wherein the information (3) about the vehicle movement comprises a steering angle of the steering wheel of the vehicle (10, 33, 43) and/or a vehicle speed.

11. Method according to anyone of the preceding claims 9 and 10, wherein the information (3) about the vehicle surroundings further comprises information (3) about detected lanes (30, 31, 32, 40, 41, 42).

12. Method according to anyone of the preceding claims 9 to 11, wherein controlling (S2) comprises calculating based on the information (3) about the vehicle movement and/or the vehicle surroundings the drivers intention and controlling the turn lights (11, 12, 13, 14) of the vehicle (10, 33, 43) according to the calculated drivers intention.

13. Method according to claim 12, wherein controlling (S2) comprises turning the turn lights (11, 12, 13, 14) for the respective direction on, if the intention to change the driving lane (30, 31, 32, 40, 41, 42) or perform a turn is calculated and the turn lights (11, 12, 13, 14) are currently turned off.

14. Method according to any one of claims 12 and 13, wherein controlling (S2) comprises turning the turn lights (11, 12, 13, 14) for the respective direction off, if the intention to stay on the current driving lane (30, 31, 32, 40, 41, 42) is calculated and the turn lights (11, 12, 13, 14) are currently turned on.

15. Method according to claims 10 to 14, wherein the intention to change the driving lane (30, 31, 32, 40, 41, 42) and/or the intention to stay on the current driving lane (30, 31, 32, 40, 41, 42) is calculated based at least on the steering angle of the vehicle (10, 33, 43) and the position of the vehicle (10, 33, 43) in a currently used lane (30, 31, 32, 40, 41, 42) of the road.

## Patentansprüche

1. Steuereinheit (1) zum Steuern von Fahrtrichtungsanzeigeleuchten (11, 12, 13, 14) in einem Fahrzeug (10, 33, 43), wobei die Steuereinheit (1) aufweist:
eine Kommunikationsschnittstelle (2), und
eine Beleuchtungssteuerung (4), die mit der
Kommunikationsschnittstelle (2) gekoppelt und dazu ausgebildet ist, über die Kommunikationsschnittstelle (2) Information (3) über die Fahrzeugumgebung und optional zusätzlich über die Fahrzeugbewegung abzurufen,
wobei die Beleuchtungssteuerung (4) ferner dazu ausgebildet ist, die Fahrtrichtungsanzeigeleuchten (11, 12, 13, 14) des Fahrzeugs (10, 33, 43, 53) basierend auf der abgerufenen Information (3) über die Fahrzeugumgebung und optional zusätzlich über die Fahrzeugbewegung zu steuern,
**dadurch gekennzeichnet, dass**
die Information (3) über die Fahrzeugumgebung eine Straßenauslegungsinformation (3) über die Anzahl an Spuren (30, 31, 32, 40, 41, 42) der Straße, wie in einem Navigationssystem (19) gespeichert oder wie durch ein Kamerasystem (17) detektiert, aufweist.

2. Steuereinheit (1) nach Anspruch 1,
wobei die Information (3) über die Fahrzeugbewegung einen Lenkwinkel des Lenkrads des Fahrzeugs (10, 33, 43) und/oder eine Fahrzeuggeschwindigkeit aufweist.

3. Steuereinheit (1) nach einem der vorhergehenden Ansprüche, wobei die Information (3) über die Fahrzeugumgebung ferner eine Information (3) über detektierte Spuren (30, 31, 32, 40, 41, 42) aufweist.

4. Steuereinheit (1) nach einem der vorhergehenden Ansprüche, wobei die Beleuchtungssteuerung (4) einen Fahrerintentionsrechner (15) aufweist, der dazu ausgebildet ist, basierend auf der Information (3) über die Fahrzeugbewegung und/oder die Fahrzeugumgebung die Fahrerintention zu berechnen und die Fahrtrichtungsanzeigeleuchten (11, 12, 13, 14) des Fahrzeugs (10, 33, 43) gemäß der berechneten Fahrerintention zu steuern.

5. Steuereinheit (1) nach Anspruch 4, wobei der Fahrerintentionsrechner (15) dazu ausgebildet ist, die Fahrtrichtungsanzeigeleuchten (11, 12, 13, 14) für die jeweilige Richtung einzuschalten, wenn der Fahrerintentionsrechner (15) die Intention zum Wechseln der Fahrspur (30, 31, 32, 40, 41, 42) oder Durchführen eines Abbiegens berechnet und die Fahrtrichtungsanzeigeleuchten (11, 12, 13, 14) derzeit ausgeschaltet sind.

6. Steuereinheit (1) nach einem der Ansprüche 4 und 5, wobei der Fahrerintentionsrechner (15) dazu ausgebildet ist, die Fahrtrichtungsanzeigeleuchten (11, 12, 13, 14) für die jeweilige Richtung auszuschalten, wenn der Fahrerintentionsrechner (15) die Intention zum Verbleiben auf der aktuellen Fahrspur (30, 31, 32, 40, 41, 42) berechnet und die Fahrtrichtungsanzeigeleuchten (11, 12, 13, 14) derzeit eingeschaltet sind.

7. Steuereinheit (1) nach den Ansprüchen 2 bis 6, wobei der Fahrerintentionsrechner (15) die Intention zum Wechseln der Fahrspur (30, 31, 32, 40, 41, 42) und/oder die Intention zum Verbleiben auf der aktuellen Fahrspur (30, 31, 32, 40, 41, 42) basierend mindestens auf dem Lenkwinkel des Fahrzeugs (10, 33, 43) und der Position des Fahrzeugs (10, 33, 43) in einer derzeit verwendeten Spur (30, 31, 32, 40, 41, 42) der Straße berechnet.

8. Fahrzeug (10, 33, 43), das Folgendes aufweist eine Steuereinheit (1) nach einem der Ansprüche 1 bis 7, und einen Fahrzeugbus (16), der die Steuereinheit (1) mit einer Anzahl von elektronischen Fahrzeugsystemen (17, 18, 19, 20) verbindet.

9. Verfahren zum Steuern von Fahrtrichtungsanzeigeleuchten (11, 12, 13, 14) in einem Fahrzeug (10, 33, 43), wobei das Verfahren aufweist:
Abrufen (S1) von Information (3) über die Fahrzeugumgebung und optional zusätzlich über die Fahrzeugbewegung, und Steuern (S2) der Fahrtrichtungsanzeigeleuchten (11, 12, 13, 14) des Fahrzeugs (10, 33, 43) basierend auf der abgerufenen Information (3) über die Fahrzeugumgebung und optional zusätzlich über die Fahrzeugbewegung,
**dadurch gekennzeichnet, dass**
die Information (3) über die Fahrzeugumgebung eine Straßenauslegungsinformation (3) über die Anzahl an Spuren (30, 31, 32, 40, 41, 42) der Straße, wie in einem Navigationssystem (19) gespeichert oder wie durch ein Kamerasystem (17) detektiert, aufweist.

10. Verfahren nach Anspruch 9,
wobei die Information (3) über die Fahrzeugbewegung einen Lenkwinkel des Lenkrads des Fahrzeugs (10, 33, 43) und/oder eine Fahrzeuggeschwindigkeit aufweist.

11. Verfahren nach einem der vorhergehenden Ansprüche 9 und 10, wobei die Information (3) über die Fahrzeugumgebung ferner eine Information (3) über detektierte Spuren (30, 31, 32, 40, 41, 42) aufweist.

12. Verfahren nach einem der vorhergehenden Ansprüche 9 bis 11, wobei das Steuern (S2) Berechnen, basierend auf der Information (3) über die Fahrzeugbewegung und/oder die Fahrzeugumgebung, der Fahrerintention und Steuern der Fahrtrichtungsanzeigeleuchten (11, 12, 13, 14) des Fahrzeugs (10, 33, 43) gemäß der berechneten Fahrerintention aufweist.

13. Verfahren nach Anspruch 12, wobei das Steuern (S2) Einschalten der Fahrtrichtungsanzeigeleuchten (11, 12, 13, 14) für die jeweilige Richtung aufweist, wenn die Intention zum Wechseln der Fahrspur (30, 31, 32, 40, 41, 42) oder Durchführen eines Abbiegens berechnet wird und die Fahrtrichtungsanzeigeleuchten (11, 12, 13, 14) derzeit ausgeschaltet sind.

14. Verfahren nach einem der Ansprüche 12 und 13, wobei das Steuern (S2) Ausschalten der Fahrtrichtungsanzeigeleuchten (11, 12, 13, 14) für die jeweilige Richtung aufweist, wenn die Intention zum Verbleiben auf der aktuellen Fahrspur (30, 31, 32, 40, 41, 42) berechnet wird und die Fahrtrichtungsanzeigeleuchten (11, 12, 13, 14) derzeit eingeschaltet sind.

15. Verfahren nach einem der Ansprüche 10 bis 14, wobei die Intention zum Wechseln der Fahrspur (30, 31, 32, 40, 41, 42) und/oder die Intention zum Verbleiben auf der aktuellen Fahrspur (30, 31, 32, 40, 41, 42) basierend mindestens auf dem Lenkwinkel des Fahrzeugs (10, 33, 43) und der Position des Fahrzeugs (10, 33, 43) in einer derzeit verwendeten Spur (30, 31, 32, 40, 41, 42) der Straße berechnet wird.

## Revendications

1. Unité de commande (1) pour commander des clignotants (11, 12, 13, 14) dans un véhicule (10, 33, 43), l'unité de commande (1) comprenant :
une interface de communication (2), et
un dispositif de commande d'éclairage (4) couplé à l'interface de communication (2) et configuré pour récupérer par l'intermédiaire de l'interface de communication (2) des informations (3) sur l'environnement du véhicule et facultativement en plus sur le déplacement du véhicule,
le dispositif de commande d'éclairage (4) étant en outre configuré pour commander les clignotants (11, 12, 13, 14) du véhicule (10, 33, 43, 53) sur la base des informations récupérées (3) sur l'environnement du véhicule et facultativement en plus sur le déplacement du véhicule,
**caractérisée en ce que**
les informations (3) sur l'environnement du véhicule comprennent des informations de configuration de route (3) sur le nombre de voies (30, 31, 32, 40, 41, 42) de la route telles que stockées dans un système de navigation (19) ou telles que détectées par un système de caméra (17).

2. Unité de commande (1) selon la revendication 1,
dans laquelle les informations (3) sur le déplacement du véhicule comprennent un angle de braquage du volant du véhicule (10, 33, 43) et/ou une vitesse du véhicule.

3. Unité de commande (1) selon l'une quelconque des revendications précédentes, dans laquelle les informations (3) sur l'environnement du véhicule comprennent en outre des informations (3) sur des voies détectées (30, 31, 32, 40, 41, 42).

4. Unité de commande (1) selon l'une quelconque des revendications précédentes, dans laquelle le dispositif de commande d'éclairage (4) comprend un calculateur d'intention du conducteur (15), qui est configuré pour calculer l'intention du conducteur sur la base des informations (3) sur le déplacement du véhicule et/ou l'environnement du véhicule et pour commander les clignotants (11, 12, 13, 14) du véhicule (10, 33, 43) en fonction de l'intention du conducteur calculée.

5. Unité de commande (1) selon la revendication 4, dans laquelle le calculateur d'intention du conducteur (15) est configuré pour allumer les clignotants (11, 12, 13, 14) pour la direction respective, si le calculateur d'intention du conducteur (15) calcule l'intention de changer de voie de circulation (30, 31, 32, 40, 41, 42) ou de réaliser un virage et que les clignotants (11, 12, 13, 14) sont actuellement éteints.

6. Unité de commande (1) selon l'une quelconque des revendications 4 et 5, dans laquelle le calculateur d'intention du conducteur (15) est configuré pour éteindre les clignotants (11, 12, 13, 14) pour la direction respective, si le calculateur d'intention du conducteur (15) calcule l'intention de rester sur la voie de circulation (30, 31, 32, 40, 41, 42) actuelle et que les clignotants (11, 12, 13, 14) sont actuellement allumés.

7. Unité de commande (1) selon les revendications 2 à 6, dans laquelle le calculateur d'intention du conducteur (15) calcule l'intention de changer de voie de circulation (30, 31, 32, 40, 41, 42) et/ou l'intention de rester sur la voie de circulation (30, 31, 32, 40, 41, 42) actuelle sur la base au moins de l'angle de braquage du véhicule (10, 33, 43) et de la position du véhicule (10, 33, 43) dans une voie actuellement utilisée (30, 31, 32, 40, 41, 42) de la route.

8. Véhicule (10, 33, 43) comprenant
une unité de commande (1) selon l'une quelconque des revendications 1 à 7, et un bus de véhicule (16), qui connecte l'unité de commande (1) à un certain nombre de systèmes de véhicule électroniques (17, 18, 19, 20).

9. Procédé pour commander des clignotants (11, 12, 13, 14) dans un véhicule (10, 33, 43), le procédé comprenant :
la récupération (S1) d'informations (3) sur l'environnement du véhicule et
facultativement en plus sur le déplacement du véhicule, et
la commande (S2) des clignotants (11, 12, 13, 14) du véhicule (10, 33, 43) sur la base des informations récupérées (3) sur l'environnement du véhicule et
facultativement en plus sur le déplacement du véhicule,
**caractérisé en ce que**
les informations (3) sur l'environnement du véhicule comprennent des informations de configuration de route (3) sur le nombre de voies (30, 31, 32, 40, 41, 42) de la route telles que stockées dans un système de navigation (19) ou telles que détectées par un système de caméra (17).

10. Procédé selon la revendication 9,
dans lequel les informations (3) sur le déplacement du véhicule comprennent un angle de braquage du volant du véhicule (10, 33, 43) et/ou une vitesse du véhicule.

11. Procédé selon l'une quelconque des revendications précédentes 9 et 10, dans lequel les informations (3) sur l'environnement du véhicule comprennent en outre des informations (3) sur des voies détectées (30, 31, 32, 40, 41, 42).

12. Procédé selon l'une quelconque des revendications précédentes 9 à 11, dans laquelle la commande (S2) comprend un calcul de l'intention du conducteur basé sur les informations (3) sur le déplacement du véhicule et/ou l'environnement du véhicule et la commande des clignotants (11, 12, 13, 14) du véhicule (10, 33, 43) en fonction de l'intention du conducteur calculée.

13. Procédé selon la revendication 12, dans lequel la commande (S2) comprend l'allumage des clignotants (11, 12, 13, 14) pour la direction respective, si l'intention de changer de voie de circulation (30, 31, 32, 40, 41, 42) ou de réaliser un virage est calculée et que les clignotants (11, 12, 13, 14) sont actuellement éteints.

14. Procédé selon l'une quelconque des revendications 12 et 13, dans lequel la commande (S2) comprend l'extinction des clignotants (11, 12, 13, 14) pour la direction respective, si l'intention de rester sur la voie de circulation (30, 31, 32, 40, 41, 42) actuelle est calculée et que les clignotants (11, 12, 13, 14) sont actuellement allumés.

15. Procédé selon les revendications 10 à 14, dans lequel l'intention de changer de voie de circulation (30, 31, 32, 40, 41, 42) et/ou l'intention de rester sur la voie de circulation (30, 31, 32, 40, 41, 42) actuelle est calculée sur la base au moins de l'angle de braquage du véhicule (10, 33, 43) et de la position du véhicule (10, 33, 43) dans une voie actuellement utilisée (30, 31, 32, 40, 41, 42) de la route.
